# FASCICULE DE BREVET EUROPEEN

(11) **EP 0 522 954 B1**
(45) Date de publication et mention de la délivrance du brevet: **14.06.1995**
(21) Numéro de dépôt: 92401943.3
(22) Date de dépôt: 07.07.1992
(51) Int. Cl.: B64G 1/42

(54) **Réservoir à tension superficielle, à débits de sortie multiples**
Oberflächenspannungsbehälter mit Mehrfachausgangleistungen
Surface tension vessel with multiple output flow

(30) Priorité: 08.07.1991 FR 9108549
(43) Date de publication de la demande: 13.01.1993
(73) Titulaire: SOCIETE EUROPEENNE DE PROPULSION, 92150 Suresnes (FR)
(72) Inventeur: Canedi, Frédéric, F-60240 Chaumont en Vexin (FR)
(74) Mandataire: Thévenet, Jean-Bruno

(56) Documents cités:
- EP-A- 0 367 001
- WO-A-88/03499
- FR-A- 2 254 494
- US-A- 4 595 398
- US-A- 4 901 762

## Description

### Domaine de l'invention

La présente invention concerne un réservoir de stockage de liquide pressurisé, destiné à fonctionner dans des véhicules spatiaux ou des satellites afin d'alimenter des moteurs et autres récepteurs selon des débits variés adaptés à chacun d'eux, et utilisant la force de séparation produite par la tension superficielle pour collecter plus spécifiquement en apesanteur le liquide contenu à l'intérieur du réservoir, dans certaines zones privilégiées.

L'invention concerne de façon plus spécifique un réservoir à tension superficielle, à débits de sortie multiples, destiné à fonctionner en microgravité dans des véhicules spatiaux ou des satellites afin d'alimenter en ergol un moteur principal et au moins un moteur ou récepteur annexe, comprenant à l'intérieur d'une même coque au moins deux compartiments de dimensions différentes séparés par au moins une première membrane munie d'au moins une crépine de communication entre le compartiment de plus grandes dimensions et le compartiment de plus petites dimensions, un orifice d'alimentation en gaz de pressurisation étant ménagé dans la coque de manière à déboucher dans le grand compartiment, un dispositif d'expulsion de liquide étant placé dans le petit compartiment et des moyens d'évacuation de l'ergol vers les organes à alimenter étant disposés pour l'essentiel selon une direction peu éloignée de celle de l'accélération principale conférée par le moteur principal, mais en sens opposé à celle-ci.

### Art antérieur

On connaît déjà divers types de réservoirs de stockage de liquides, notamment d'ergol, dans lesquels est introduit un gaz inerte de mise sous pression permettant l'expulsion du liquide vers des organes d'utilisation, notamment des moteurs de propulsion, ,au sein de véhicules spatiaux, tels que des satellites, fonctionnant en apesanteur.

Il est particulièrement important dans ces applications, que l'alimentation des moteurs s'effectue à l'aide d'ergols liquides exempts de gaz. La collecte de l'ergol liquide en état d'apesanteur est particulièrement délicate en fin de drainage, lorsqu'il reste une quantité relativement faible d'ergol dans le réservoir, le gaz inerte de pressurisation occupant une grande partie du volume initial.

Pour remédier à ce problème, il existe déjà des dispositifs d'expulsion de liquide prévus dans des réservoirs fonctionnant en apesanteur. Ces dispositifs permettent, en apesanteur, de puiser le liquide contenu dans le réservoir, n'importe où qu'il soit. Ces dispositifs font appel aux forces de tension de surface qui, en microgravité, deviennent prépondérantes. Ces forces entraînent le liquide dans des zones où les parois sont le plus rapprochées et les formes des interfaces liquide/gaz sont telles que leur surface soit minimum.

Les réservoirs et les dispositifs d'expulsion de liquide contenus à l'intérieur peuvent présenter différentes formes, selon l'application envisagée.

On connaît ainsi par le document GB-A-2 170 163 un réservoir renfermant un dispositif d'expulsion de liquide de forme sphérique et pourvu d'ouvertures munies de tamis faisant office de barrières pour les gaz grâce à l'effet de la tension superficielle.

Un autre réservoir du même type, muni intérieurement de dispositifs d'expulsion de liquide est décrit dans la demande WO 88/03499. Chacun des réservoirs du dispositif comporte en effet un dispositif utilisant l'effet de la tension de surface pour empêcher les gaz de sortir du réservoir pendant que du liquide est susceptible de sortir du réservoir. Les dispositifs décrits dans ce document sont chacun constitués de deux plaques perforées circulaires revêtues d'une crépine constituée d'un maillage, et sont placés près de l'orifice de sortie de liquide.

Dans tous les exemples précités, les réservoirs présentent la caractéristique d'obtenir, en apesanteur, un débit donné de liquide, et surtout de délivrer un liquide exempt de gaz.

Pour un réservoir, ou un compartiment de stockage important destiné à fournir un débit d'ergol important, le dispositif d'expulsion de liquide exploitant les phénomènes de tension superficielle doit être dimensionné en conséquence. Or, tout dispositif d'expulsion de liquide comporte un certain volume de liquide résiduel impuisable. Le volume résiduel impuisable constitue une masse d'ergol inutilisée qui est d'autant plus importante que le dispositif d'expulsion de liquide est de grande taille.

Or, dans le cas de satellites, il est généralement nécessaire de prévoir l'alimentation en ergol de plusieurs moteurs avec des débits différents, et donc des réservoirs ou compartiments de réservoir de différentes tailles.

En particulier, le moteur servant à la manoeuvre d'apogée pour la mise en orbite implique des pertes de charge élevée et doit être alimenté à l'aide d'un débit d'ergol important provenant d'un réservoir de grande taille tandis que le moteur servant à effectuer des corrections d'attitude du satellite sur son orbite peut être de plus petite taille et être alimenté avec un débit d'ergol plus réduit.

En fonctionnement, il est fixé pour chaque débit d'ergol une durée maximale de fourniture d'ergol pour un appel et une durée maximale d'interruption entre deux appels successifs. Il est tenu compte de l'accélération donnée au véhicule lorsqu'il est fait appel aux gros débits.

On a déjà proposé d'alimenter les différents moteurs, ou autres récepteurs, nécessitant des débits différents, à partir de plusieurs réservoirs séparés, éventuellement mitoyens dotés, pour les petits débits, d'un dispositif d'expulsion de liquide (DEL) normal, qui peut être réalisé par exemple selon l'enseignement des documents EP-A-0043777 et EP-A-0042784. Les réservoirs destinés aux gros débits sont pour leur part soit équipés d'un gros DEL pénalisant en masse et en volume mort, soit d'une vessie pressurisée, telle que décrite par exemple dans les documents US-A-3592360 ou US-A-3933448.

Afin d'éviter l'utilisation d'un gros DEL ou d'une vessie pour le réservoir des gros débits, en régime nominal, il a également été proposé d'orienter au moins approximativement la tuyauterie de sortie des réservoirs destinés aux gros débits d'une façon parallèle et en sens opposé au vecteur de l'accélération conférée au véhicule. Cette solution implique toutefois de disposer d'un réservoir annexe rempli pour amorcer l'accélération, ou d'autres moyens tels qu'une batterie de micro-fusées à poudre par exemple.

On a encore proposé par le document GB-A-2 109 760 de réaliser un réservoir à produit carburant, de forme générale sphérique, dont l'espace intérieur est séparé en deux compartiments par une pièce conique dont le fond comporte un tamis à mailles fines assurant une communication entre les deux compartiments. Le compartiment situé près de la sortie de liquide est équipé d'un dispositif d'expulsion de liquide. Un tel réservoir à deux compartiments présente un dispositif de pressurisation unique et peut être rempli à l'aide d'un dispositif de remplissage unique. Tout le liquide contenu dans le compartiment supérieur doit toutefois d'abord transiter par le compartiment inférieur muni d'un DEL, de sorte que la sortie unique d'ergol qui n'est reliée qu'au compartiment inférieur ne permet pas des ajustements de débit dans des plages de valeur élevées.

### Objet et description succincte de l'invention

La présente invention vise à remédier aux inconvénients précités et à réaliser un réservoir unique de stockage d'ergol de structure simple qui permet d'ajuster facilement les débits de sortie de liquide à des moteurs de consommations très différentes, et d'utiliser au maximum l'ensemble du volume d'ergol stocké dans le réservoir.

Ce but et d'autres encore sont atteints conformément à l'invention grâce à un réservoir à tension superficielle, à débits de sortie multiples, destiné à fonctionner en microgravité dans des véhicules spatiaux ou des satellites afin d'alimenter en ergol un moteur principal et au moins un moteur annexe ou autre récepteur, comprenant à l'intérieur d'une même coque au moins deux compartiments de dimensions différentes séparés par au moins une première membrane munie d'au moins une crépine de communication entre le compartiment de plus grandes dimensions et le compartiment de plus petites dimensions, un orifice d'alimentation en gaz de pressurisation étant ménagé dans la coque de manière à déboucher dans le grand compartiment, un dispositif d'expulsion de liquide étant placé dans le petit compartiment et des moyens d'évacuation de l'ergol vers les organes à alimenter étant disposés pour l'essentiel selon une direction peu éloignée de celle de l'accélération principale conférée par le moteur principal, mais en sens opposé à celle-ci. Il comprend des moyens munis d'au moins une crépine de sortie formant barrière de gaz pour évacuer au moins une partie substantielle de l'ergol contenu dans le grand compartiment directement vers les moyens d'évacuation de l'ergol sans transiter à travers le petit compartiment, de telle sorte que le réservoir autorise le prélèvement direct d'ergol à la fois à partir du grand compartiment et à partir du petit compartiment en définissant un débit maximum de sortie d'ergol pouvant être de l'ordre de cent fois le débit minimum autorisé.

On notera que le débit effectif de sortie-d'ergol dépend principalement de la composante de l'accélération du véhicule selon la direction des tuyauteries de sortie, ainsi que des pertes de charge dues à des récepteurs alimentés.

L'indépendance du grand compartiment et du petit compartiment en ce qui concerne leurs dispositifs d'évacuation de liquide fait que le diamètre de la crépine de sortie et celui du tube de sortie pour l'évacuation de liquide à partir du grand compartiment, peuvent être de grandes dimensions et ne jouent alors qu'un rôle tout à fait secondaire dans le dimensionnement du débit.

Selon l'invention, le grand compartiment ne comporte pas de DEL surdimensionné, seul un petit DEL partiel d'appoint pouvant dans certains cas être utilisé pour compenser une inclinaison de l'accélération par rapport aux moyens d'évacuation de liquide et alimenter le moteur principal au début de son fonctionnement.

Les crépines de sortie des compartiments ont un point de bulle leur permettant de respecter leur fonction de barrière de gaz.

Les crépines de communication entre compartiments sont elles-mêmes définies de façon à éviter ou limiter les retours d'ergol d'un petit compartiment vers un grand compartiment, tout en permettant l'alimentation en ergol du petit compartiment ainsi que sa pressurisation. L'approvisionnement du petit compartiment peut ainsi être complété au fur et à mesure par l'ergol contenu dans le grand compartiment, ce qui apporte beaucoup de souplesse sans surcoût.

Le réservoir selon l'invention se prête à différentes variantes de réalisation qui sont indiquées ci-dessous.

Selon un premier mode de réalisation possible le réservoir comporte un premier tube de sortie approximativement diamétralement opposé à l'orifice d'alimentation en gaz de pressurisation pour l'évacuation directe de l'ergol à partir du grand compartiment

Dans ce cas, le réservoir peut comprendre un second tube de sortie disposé coaxialement autour du premier tube de sortie pour l'évacuation de l'ergol à partir du petit compartiment par un passage annulaire muni d'une crépine formant barrière de gaz.

Le premier tube de sortie de plus faible section peut déboucher dans le second tube de sortie qui alimente ensuite par dérivation l'ensemble des récepteurs, ou les deux tubes de sortie peuvent être raccordés à des tuyauteries indépendantes. Dans ce dernier cas, chaque compartiment ayant sa propre tuyauterie de sortie connectée sur un ou plusieurs récepteurs, il est possible d'accumuler par capillarité des réserves d'ergol propres à chaque usage.

Selon un autre mode de réalisation possible, le réservoir comprend un passage de sortie muni d'une crépine formant barrière de gaz, pour l'évacuation de l'ergol à partir du petit compartiment, lequel passage de sortie est délocalisé par rapport au premier tube de sortie et se trouve directement raccordé à une tuyauterie indépendante des tuyauteries raccordées au premier tube de sortie.

Selon encore un autre mode de réalisation, le réservoir comprend un passage de sortie muni de crépines de sortie formant barrière de gaz, pour l'évacuation de l'ergol à partir du petit compartiment, lequel passage de sortie débouche dans un réceptacle qui est lui-même en communication avec le premier tube de sortie.

Selon encore un autre mode de réalisation, le réservoir comporte un premier tube de sortie pour l'évacuation directe de l'ergol à partir du grand compartiment à travers un collecteur annulaire disposé dans une zone frontière entre le grand compartiment et le petit compartiment dans le quart inférieur du réservoir opposé à l'orifice d'alimentation en gaz de pressurisation.

La première membrane peut être située essentiellement dans un plan perpendiculaire à un axe de symétrie du réservoir passant par l'orifice d'alimentation en gaz de pressurisation.

Dans ce cas, la première membrane peut être plane ou présenter une forme incurvée avec sa convexité tournée vers le petit compartiment.

Dans le cas d'un tube de sortie prenant naissance dans un collecteur annulaire, la première membrane peut présenter une forme tronconique avec sa petite base tournée vers le grand compartiment, la crépine de communication entre le grand compartiment et le petit compartiment étant elle-même disposée dans la partie centrale de la première membrane au niveau de ladite petite base.

Selon un mode de réalisation avantageux, la crépine de sortie formant barrière de gaz pour l'évacuation de l'ergol contenu dans le grand réservoir est située dans la partie centrale de la première membrane tandis que la crépine de communication entre le grand compartiment et le petit compartiment est disposée dans une zone annulaire de la première membrane située à distance de ladite partie centrale.

L'invention concerne également un réservoir comprenant en outre une deuxième membrane parallèle à ladite première membrane, les première et deuxième membranes définissant entre elles ledit petit compartiment muni d'un dispositif d'expulsion de liquide tandis que la deuxième membrane définit par ailleurs avec le fond de réservoir dans lequel sont disposés les moyens d'évacuation d'ergol, un compartiment supplémentaire de petites dimensions dépourvu de dispositif d'expulsion de liquide et constituant un réservoir d'amorçage spécifique du gros débit, la deuxième membrane étant munie d'au moins une crépine de communication entre le petit compartiment et le petit compartiment supplémentaire et le premier tube de sortie traversant sans communication à la fois le petit compartiment et le petit compartiment supplémentaire.

Dans ce cas, de préférence, des tubes de communication d'axe perpendiculaire auxdites première et deuxième membranes sont placés entre le grand compartiment et le petit compartiment supplémentaire, et des crépines sont placées au moins sur l'une des extrémités desdits tubes.

De plus, selon une variante de réalisation possible, des tubes de communication orientés perpendiculairement auxdites première et deuxième membranes sont placés entre le petit compartiment et les moyens d'évacuation d'ergol, et sont munis de crépines, formant barrière de gaz pour permettre l'évacuation directe vers les moyens d'évacuation d'ergol, de l'ergol contenu dans le petit compartiment.

La première membrane peut encore être située essentiellement dans un plan parallèle à un axe de symétrie du réservoir passant par l'orifice d'alimentation en gaz de pressurisation.

Dans ce cas, selon un mode particulier de réalisation, la crépine de sortie formant barrière de gaz pour l'évacuation de l'ergol contenu dans le grand réservoir est située dans un collecteur dont la sortie débouche dans le premier tube de sortie tandis que la crépine de communication entre le grand compartiment et le petit compartiment est disposée dans la première membrane.

### Brève description des dessins

D'autres caractéristiques et avantages de la présente invention apparaîtront mieux à la lecture de la description qui va suivre, faite en référence aux dessins annexés, sur lesquels :
- la figure 1 montre en coupe axiale une partie d'un réservoir selon un premier mode de réalisation de l'invention comprenant deux compartiments de stockage d'ergol et une membrane de séparation orientée transversalement par rapport à l'orifice de sortie principal,
- les figures 2 à 5 montrent respectivement des coupes axiales d'une partie d'un réservoir selon l'invention selon des variantes de réalisation avec une membrane unique orientée transversalement par rapport à l'orifice de sortie principal destiné aux gros débits d'ergol,
- les figures 6 et 7 montrent des coupes axiales d'une partie de réservoir selon l'invention comportant deux membranes de séparation pour définir un petit compartiment supplémentaire pour l'amorçage des gros débits,
- les figures 8 à 10 sont des vues en coupe axiale d'un réservoir selon l'invention comportant une membrane orientée parallèlement à l'orifice de sortie principal destiné aux gros débits d'ergol,
- la figure 11 est une vue en coupe axiale d'un réservoir selon l'invention comportant un collecteur annulaire de sortie disposé sous la membrane de séparation en deux compartiments, et
- la figure 12 est une vue en coupe selon la ligne XII-XII de la figure 11.

### Description détaillée de modes particuliers de réalisation

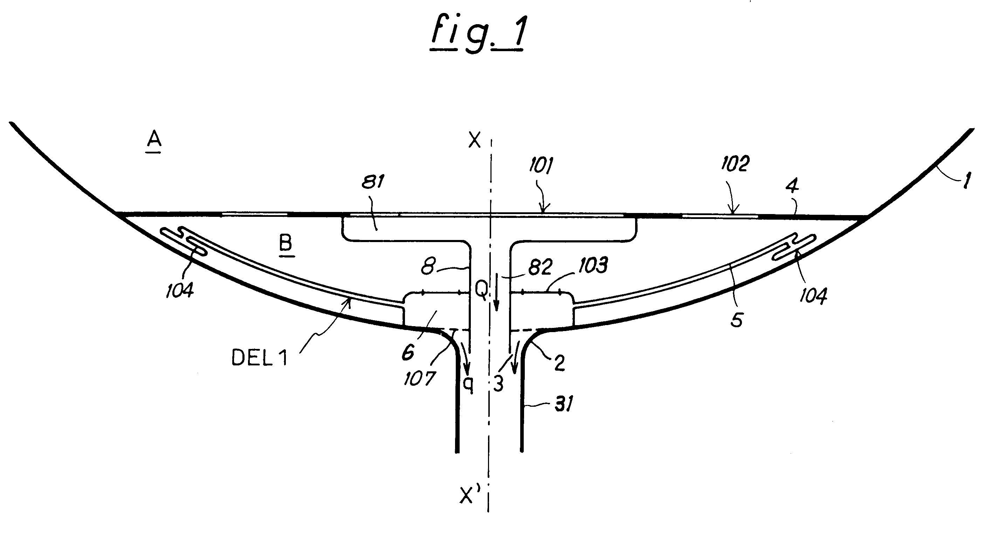

Sur la figure 1 est représentée en coupe axiale la zone d'un réservoir 1 selon l'invention située près de la sortie des liquides.

Le réservoir présente de préférence un axe XX′ de symétrie correspondant à l'axe de tubes 82, 31 de sortie des liquides définissant des moyens d'évacuation de liquide. Cet axe est aussi celui de l'accélération principale G_{Q} lors du soutirage des gros débits.

Perpendiculairement à cet axe, et fixée en son pourtour sur la paroi interne de la coque du réservoir 1, une première membrane 4 de séparation, délimite un premier compartiment A de grandes dimensions et un deuxième compartiment B de dimensions plus réduites. Cette membrane 4 comporte plusieurs orifices recouverts chacun d'une crépine 101, 102, c'est-à-dire d'une texture maillée. Selon le mode de réalisation de la figure 1 l'une des perforations est circulaire, centrée sur l'axe XX′ de symétrie du réservoir et est munie d'une crépine 101 de grand diamètre dont la dimension des mailles est faible, de sorte que cette crépine est passante pour les gros débits. Cette disposition de la crépine 101 est adaptée au fait que lors du soutirage des gros débits l'accélération doit être dans l'axe du tube de sortie, en l'absence de tout dispositif d'expulsion de liquide dans le compartiment A.

Sous cette crépine 101 se trouve un réceptacle 8 formé d'une partie circulaire 81 de diamètre légèrement plus grand que celui de la crépine 101 et d'une partie tubulaire 82 coaxiale à l'axe XX′ qui constitue une sortie de liquide à gros débit Q. Cette partie tubulaire 82 s'étend de préférence au-delà du fond du réservoir 1.

Sur un second orifice de la première membrane 4 est fixée une seconde crépine 102 par exemple en forme d'anneau centré sur l'axe XX′ de symétrie du réservoir. Cette seconde crépine 102 peut présenter des mailles de dimensions plus grosses que celles de la première crépine 101 et est utilisée pour la communication entre les compartiments A et B du réservoir. La seconde crépine 102 peut également être subdivisée en un ensemble de petites crépines réparties autour de la première crépine 101.

La première membrane 4 étant située plutôt à proximité des moyens 2 d'évacuation de liquide, il est ainsi formé un grand compartiment A utilisé plus spécifiquement pour la phase de mise en orbite définitive, pour l'alimentation des gros moteurs qui ont besoin d'un débit important. Le second compartiment B est plus petit que le premier compartiment A et sert plus spécifiquement à alimenter des petits moteurs qui n'ont besoin que d'un faible débit.

Ce second compartiment B est avantageusement équipé d'un premier dispositif d'expulsion de liquide DEL1 constitué par exemple de façon connue en soi d'un ensemble de tubes 5 longeant chacun la coque et se répartissant en étoile à partir d'une zone 6 (piège à gaz) proche de la zone de sortie 2 jusqu'à des crépines 104 situées au plus près de la paroi interne du réservoir 1 et reliées par ailleurs entre elles par des lames permettant ainsi de mieux canaliser l'ergol par capillarité.

La zone centrale 6, qui constitue un piège à gaz, est une sorte de coffrage recouvrant la zone de sortie 2, d'où partent les tubes 5 et munie sur sa surface supérieure parallèle à la membrane de séparation 4 d'une troisième crépine 103 par exemple en forme de couronne circulaire reposant sur une tôle ajourée, Cette troisième crépine 103 est de préférence passante pour tous les débits.

Enfin, de façon facultative, une autre crépine de sortie 107 peut être prévue dans l'espace annulaire 3 entre la partie tubulaire 82 et le tube extérieur de sortie 31 qui définit avec la partie tubulaire 82, au niveau de la zone de sortie 2 du réservoir, un passage annulaire pour les petits débits q issus du petit compartiment B. Cette crépine 107 est une sécurité supplémentaire pour empêcher les bulles de sortir dans certaines phases du fonctionnement seulement.

Les débits obtenus dépendent essentiellement d'une part des pertes de charge des récepteurs connectés sur le réservoir et d'autre part, pour ce qui concerne les gros débits, de l'accélération à laquelle est soumis le satellite ou le véhicule spatial dans l'axe du tube de sortie.

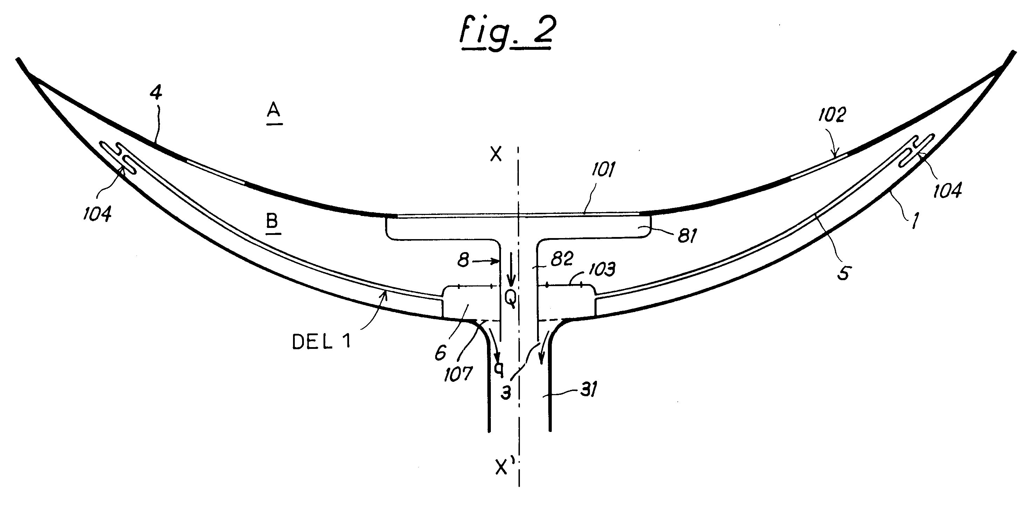

La figure 2 montre un second mode de réalisation de l'invention qui ne diffère du précédent que par la forme de la membrane 4 qui n'est pas plane mais courbe, par exemple conique ou concave. Cette forme permet de créer des endroits privilégiés de puisage d'ergol. Les autres éléments de ce mode de réalisation étant les mêmes que pour celui de la figure 1, ils ne seront pas redéfinis ici.

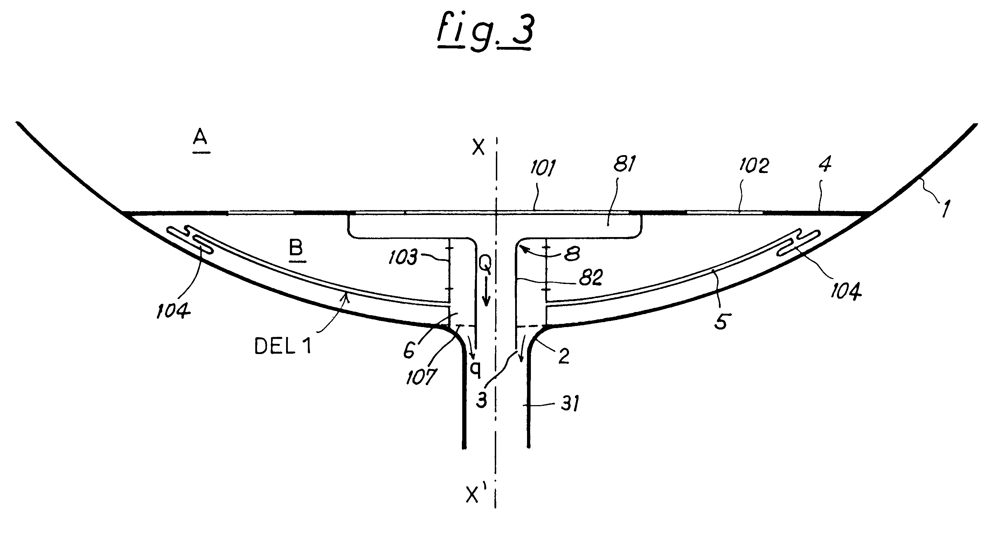

La figure 3 montre un mode de réalisation de l'invention qui ne diffère de celui de la figure 1 que par la disposition de la troisième crépine 103 qui est ici tubulaire, entourant coaxialement la partie tubulaire 82. La troisième crépine 103 peut s'étendre en une ou plusieurs parties sur la circonférence d'un élément tubulaire coaxial à l'élément 82, et qui s'étend depuis la face inférieure de la partie circulaire 81 jusqu'à la zone de sortie 2 du réservoir. Les autres éléments de ce mode de réalisation, et en particulier le dispositif d'expulsion de liquide DEL1, sont similaires à ceux du mode de réalisation de la figure 1. Cette disposition augmente la section de passage du petit débit q passant en partie par la crépine 103.

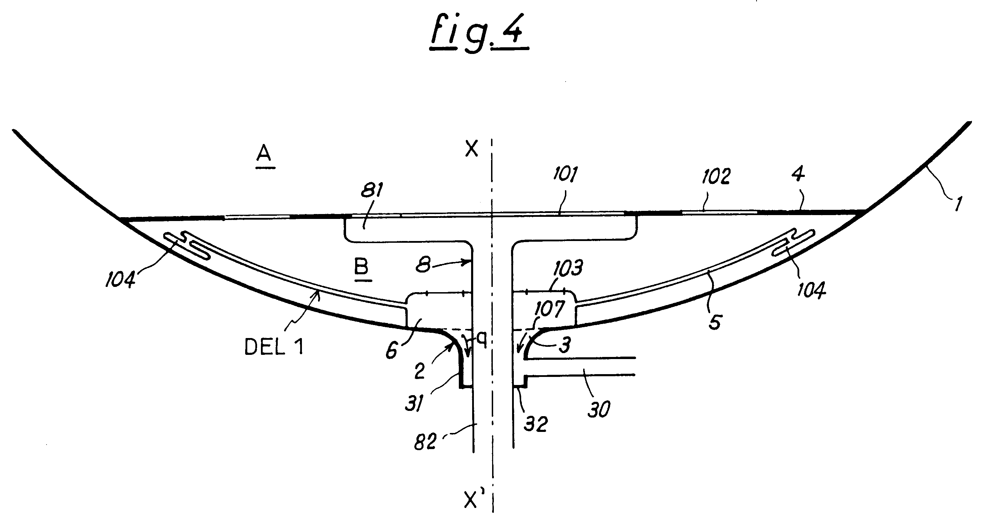

La figure 4 est une variante de la figure 1, la différence consistant en une dérivation 30 sur le tube de sortie extérieur 31 qui entoure le tube 82 pour définir un passage annulaire 3 et qui se prolonge moins loin que le tube interne 82 à la sortie du réservoir. Le tube de sortie 31 est obturé par un fond 32 peu après la zone 2 de sortie du réservoir, tandis que la dérivation 30 d'axe perpendiculaire à l'axe XX′ du tube 31 débouche dans le tube 31 entre le fond 32 et la zone de sortie.

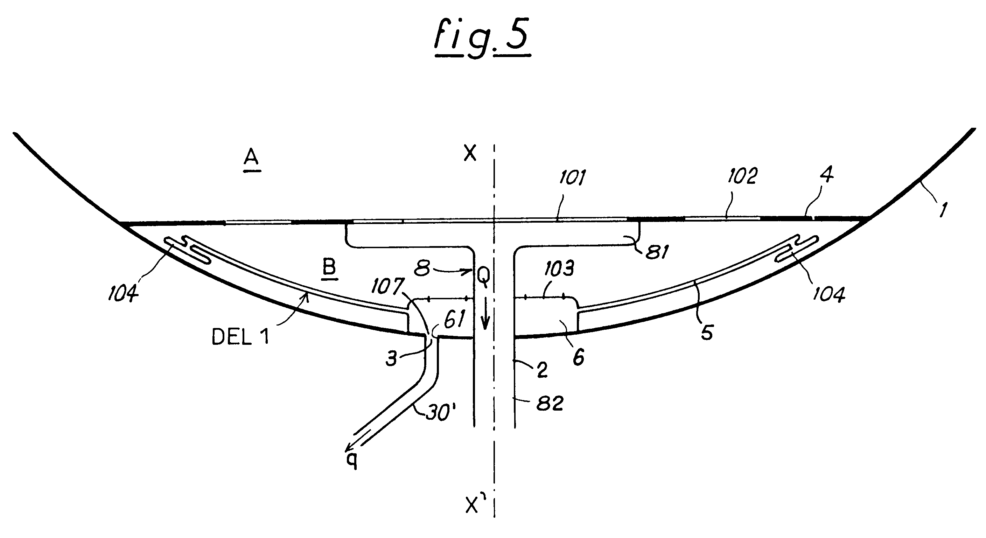

La figure 5 représente un mode de réalisation proche du précédent en ce sens que la seule différence vis-à-vis du mode de réalisation de la figure 1 réside dans le fait que les deux tubes de sortie 82 et 30′ ne sont pas coaxiaux. En effet, le tube de sortie 82 correspondant au plus gros débit Q est rectiligne et d'axe XX′, tandis que le passage 3 correspondant au petit débit q n'est pas défini par un tube externe 31 mais par un petit tube de sortie 30′ qui prend naissance dans le fond du réservoir 1, est parallèle à l'axe XX′ sur une partie de sa longueur seulement puis est coudé et se prolonge finalement par une partie faisant un angle obtus avec la partie parallèle à l'axe XX′. Plusieurs tubes de petit débit tels que 3′ peuvent déboucher dans la zone centrale 6 ou coffrage afin d'augmenter les petits débits.

Les deux derniers modes de réalisation qui viennent d'être décrits et concernant des réservoirs à orifices de sortie non concentriques et multiples, permettent d'obtenir des écoulements similaires dans les tubes servant au gros débit Q et au petit débit q.

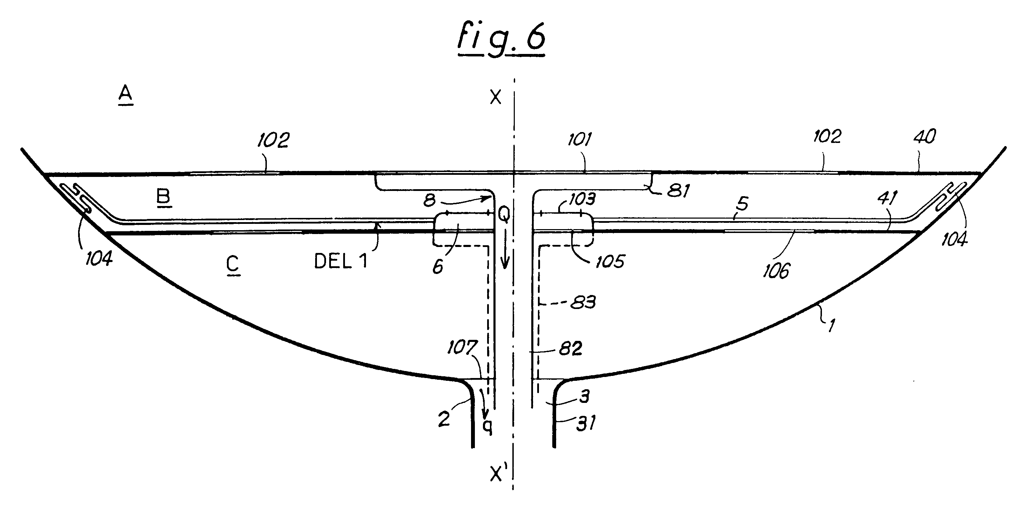

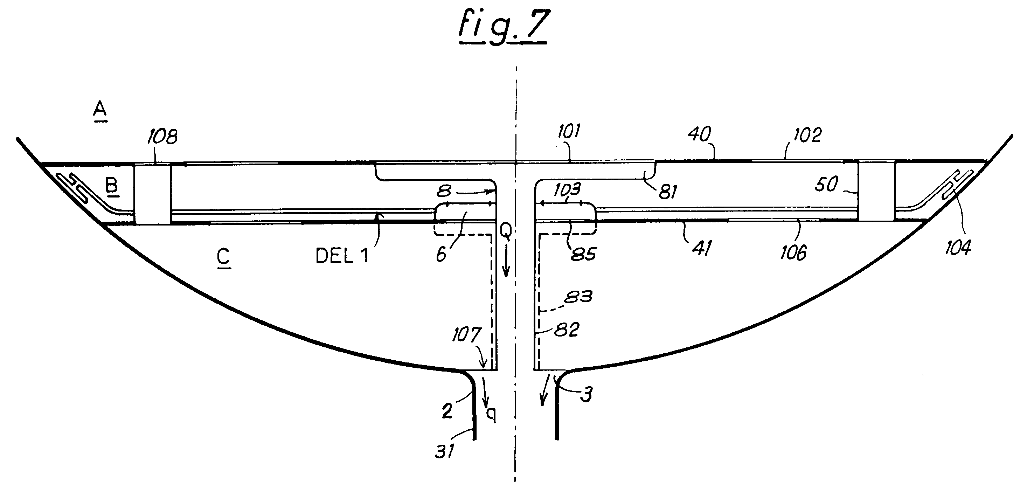

Les figures 6 et 7 concernent un réservoir du type mentionné en tête de la description comprenant trois compartiments A, B et C délimités par deux membranes de séparation 40, 41.

La membrane 40 plane, perpendiculaire à l'axe XX′ est la plus éloignée de la zone de sortie 2 et délimite donc, avec la paroi intérieure du réservoir la plus éloignée de la zone de sortie 2, le plus grand compartiment A.

Le second compartiment B est délimité par ladite membrane 40, une seconde membrane 41, parallèle à la première, et la paroi interne du réservoir 1 comprise entre les deux membranes 40, 41.

Enfin, le troisième compartiment C est défini entre la deuxième membrane 41 et le fond du réservoir dans lequel est ménagée la sortie 2.

Selon un exemple non limitatif, plusieurs crépines de communication sont placées sur des orifices et/ou des tôles perforées associées aux membranes et à au moins un dispositif d'expulsion de liquide DEL placé dans l'un des compartiments.

Des première et seconde crépines 101 et 102 telles que décrites dans les modes de réalisation précédents peuvent être placées sur la première membrane 40. De même une troisième et une quatrième crépine 103 et 104 peuvent être fixées comme décrit plus haut dans un dispositif d'expulsion de liquide placé par exemple dans le compartiment B, de sorte que la troisième crépine 103 recouvre une zone centrale 6′ à travers laquelle passe la partie tubulaire 82 drainant les gros débits de liquide venant du compartiment A.

Au niveau de la deuxième membrane 41 peut être avantageusement prévue une cinquième crépine 105 en couronne, entourant la colonne 82, et une sixième crépine 106 par exemple en forme de couronne circulaire centrée sur l'axe XX′, de rayon supérieur à celui de la couronne 105.

Une septième crépine 107 peut enfin être placée au niveau de la zone de sortie 2, dans l'espace annulaire 3 entre le tube de sortie 31 et la colonne 82 d'extraction des gros débits Q. Les petits débits q passeront par cette crépine 107 qui n'est nécessaire que lors de l'utilisation du liquide renfermé dans le troisième compartiment C, c'est-à-dire lorsque les deux autres volumes, sont déjà vides de liquide.

Une variante de ce mode de réalisation est représentée sur la figure 7, et montre des tubes de communication 50 placés entre les première et deuxième membranes 40, 41. Ces tubes 50, d'axe perpendiculaire au plan des membranes 40, 41 sont munis au moins sur l'une de leurs extrémités d'une crépine 108.

Cette disposition permet de vider plus complètement le premier compartiment A et ainsi de fonctionner avec un grand débit Q avant de vider le deuxième compartiment B.

On a également représenté en pointillés sur les figures 6 et 7 un tube central 83 qui entoure le tube central 82 et permet une communication directe entre le second compartiment B et la zone de sortie 2 sans transiter par le troisième compartiment C.

A titre de variante, les membranes 40 et 41 des deux modes de réalisation qui viennent d'être décrits peuvent être courbes et non planes.

L'utilisation des trois volumes (ou compartiments) A, B, C du réservoir est la suivante :
- le volume A est utilisé pour les ajustements et changements d'orbite,
- le volume B est utilisé pour les corrections d'attitude (phase de microgravité),
- le volume C qui est rempli initialement puis par les accélérations de désorbitation est utilisé pour l'amorçage d'un gros débit en permettant de plaquer les ergols au plus près de la sortie 2 du réservoir et d'obtenir de gros débits à partir du volume A.

Un tel réservoir permet notamment de revenir à un gros débit après les corrections d'attitude, c'est-à-dire d'autoriser une variation importante de débit, dans un sens ou dans l'autre.

Diverses modifications et adjonctions peuvent être apportées aux différents modes de réalisation qui viennent d'être décrits.

Ainsi, sur la figure 6, on a représenté un tube 82 d'expulsion du compartiment A qui pénètre légèrement dans le tube de sortie 3 du réservoir, au-delà de la crépine 107 tandis que sur la figure 7 on a représenté ce même tube 82 s'arrêtant au niveau de la crépine 107. Ces caractéristiques pourraient naturellement être inversées. Ainsi, le tube 82 de la figure 7 pourrait également être prolongé au-delà de la crépine 107 tandis que le tube 82 de la figure 6 pourrait également s'arrêter au niveau de la crépine 107.

Le réservoir selon l'invention est applicable à différents types d'ergols, par exemple les monoergols tels que l'hydrazine N₂H₄, les diergols tels que la monométhylhydrazine (MMH), le peroxyde d'azote (N₂O₄) et même les ergols cryotechniques tels que l'hydrogène ou l'oxygène, moyennant une protection thermique. Toutefois, la mise en oeuvre de réservoirs selon l'invention est plus particulièrement adaptée aux systèmes diergols pouvant nécessiter de forts débits.

Comme on l'a déjà indiqué, le ou les réservoirs selon l'invention doivent être placés essentiellement dans l'axe de l'accélération principale. Pour assurer un fonctionnement correct des ergols dans le ou les réservoirs et éviter de débiter du gaz au démarrage, il suffit de placer chaque réservoir sur la plate-forme de lancement de telle sorte que la sortie du réservoir soit la plus éloignée possible du centre instantané de rotation de la plate-forme.

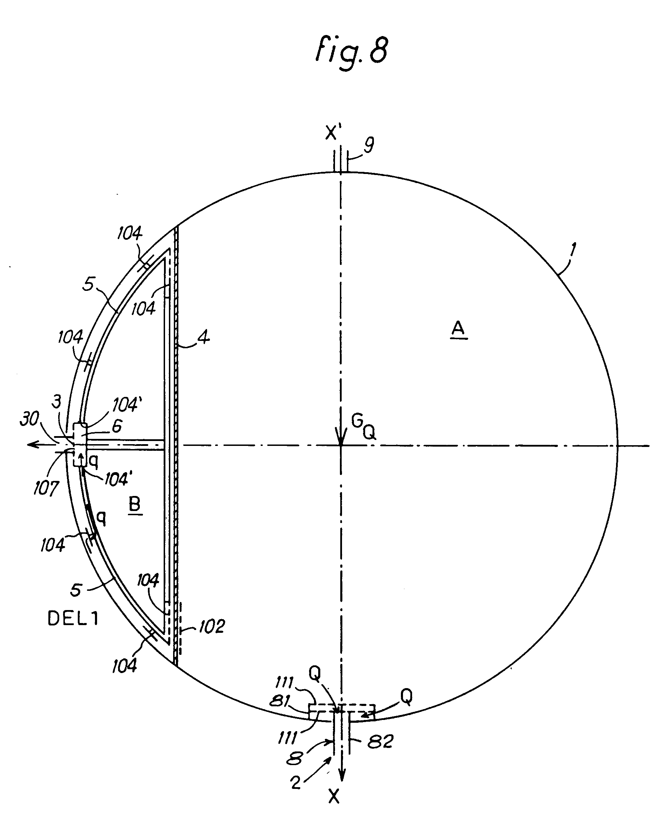

Les figures 8 à 10 montrent des réservoirs conformes à l'invention avec un grand compartiment A et un petit compartiment B séparés par une membrane 4 percée d'un orifice dans lequel est disposée une crépine 102 qui permet une communication entre les compartiments A et B pour assurer les fonctions de pressurisation et de purge. Un dispositif d'expulsion de liquide DEL1, qui peut être analogue à ceux décrits en référence aux figures 1 à 7, est disposé dans le compartiment B.

Les modes de réalisation des figures 8 à 10 se caractérisent essentiellement par la disposition de la membrane 4 qui est verticale, c'est-à-dire parallèle à l'axe diamétral du réservoir 1 qui relie l'orifice 9 de pressurisation et la zone principale 2 de sortie des gros débits de liquide. Dans ce cas, la membrane 4 est ainsi parallèle au vecteur accélération G_{Q} du réservoir lors de l'utilisation du moteur principal tel qu'un moteur d'apogée nécessitant un gros débit Q.

Sur la figure 8, le dispositif 8 d'évacuation des gros débits Q comprend un réceptacle 81 dans lequel sont disposées des crépines de sortie 111, et un tube de sortie 82 qui prend naissance dans le réceptacle 81 et se trouve orienté de façon diamétralement opposée à l'orifice de pressurisation 9, parallèlement à la direction de l'accélération G_{Q}.

Le dispositif d'évacuation des petits débit q à partir du compartiment B est disposé de façon délocalisée par rapport au dispositif 8 d'évacuation des gros débits avec un décalage angulaire de 90° dans le mode de réalisation de la figure 8, le tube de sortie 30 des petits débits q étant situé au niveau d'un passage 3 de sortie, muni d'une crépine de sortie 107, disposé sur le piège à gaz 6 du dispositif d'expulsion de liquide DEL1.

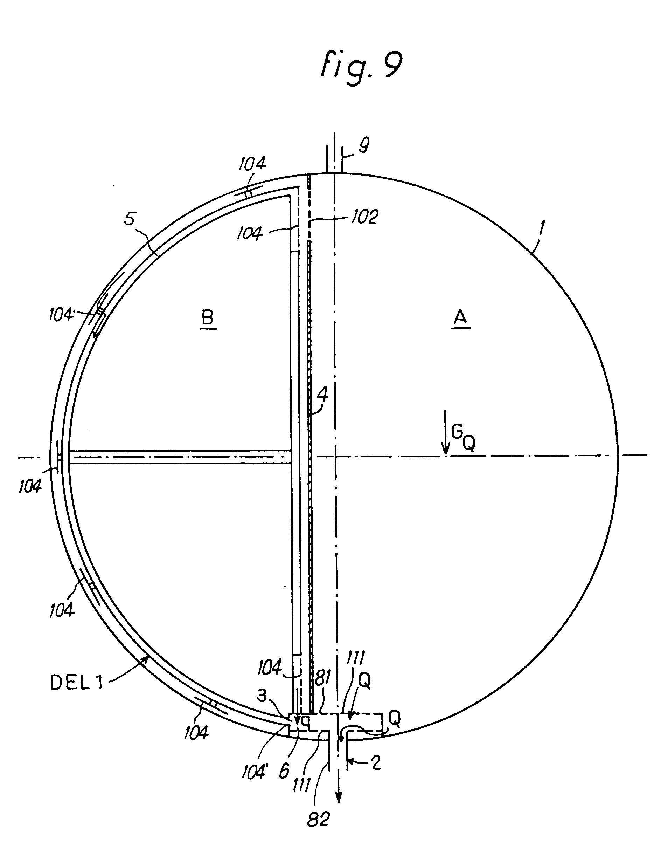

Sur le mode de réalisation de la figure 9, les sorties de gros débits Q et des petits débits se trouvent regroupées de façon diamétralement opposée à l'orifice 9 de pressurisation. Dans ce cas, pour lequel la différence de taille entre les compartiments A et B est relativement réduite, la zone 3 de sortie des petits débits q du plus petit compartiment B est située à l'intérieur du réceptacle 81 du dispositif 8 d'évacuation des gros débit Q muni de crépines de sortie 111. Les extrémités du dispositif d'expulsion de liquide DEL1 munies de crépines 104′ débouchent ainsi directement dans le réceptacle 81 qui est en communication avec le tube de sortie 82.

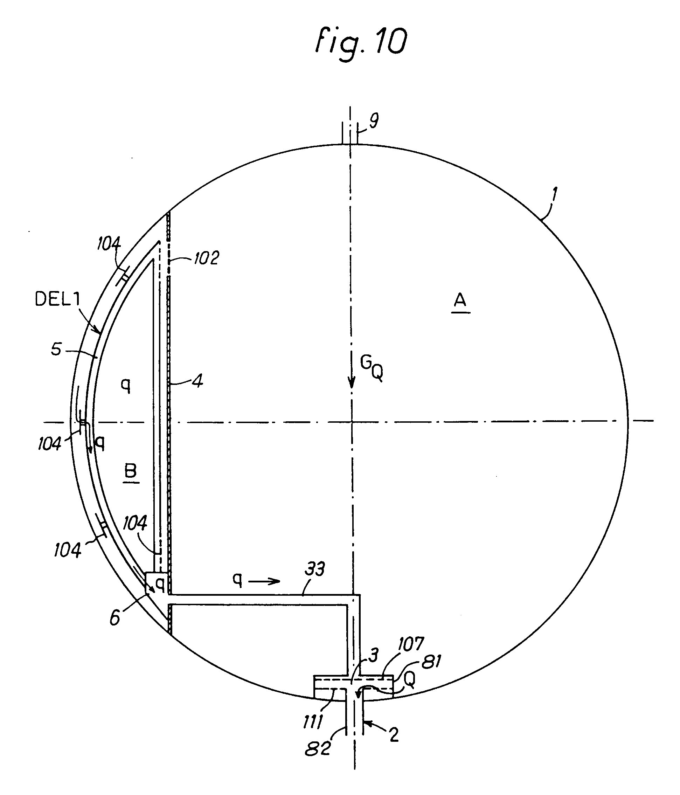

La figure 10 montre une variante de réalisation de la figure 9 dans laquelle le deuxième compartiment B présente une taille bien plus réduite que celle du premier compartiment A.

Dans ce cas, les orifices de sortie du dispositif d'expulsion de liquide DEL1 du compartiment B débouchent dans un collecteur intermédiaire 6 formant barrière de gaz qui est relié par une conduite 33 au réceptacle 81 muni de crépines de sortie 111 pour les gros débits Q. L'extrémité aval de la conduite 33 constitue la zone 3 d'évacuation des petits débits de liquide, à travers une crépine de sortie 107, cette zone 3 étant ainsi située dans le réceptacle 81 qui débouche dans le tube de sortie 82 servant aux gros débits.

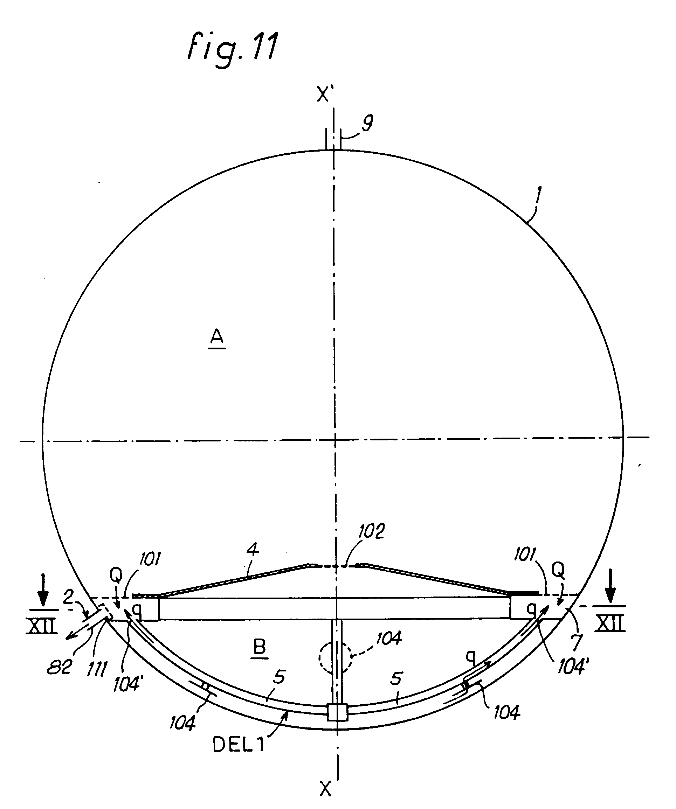

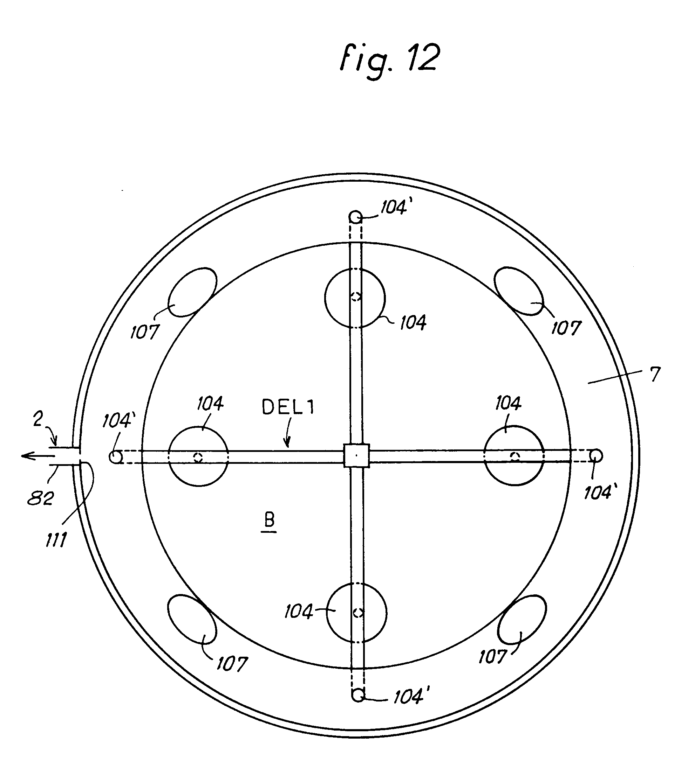

Les figures 11 et 12 montrent un mode de réalisation dans lequel un collecteur annulaire 7 est disposé sous la membrane 4 qui s'étend essentiellement perpendiculairement à l'axe XX′, mais peut présenter de préférence une forme tronconique avec la petite base tournée vers le grand compartiment A. Dans ce dernier cas, la crépine 102 de communication entre les compartiments A et B est elle-même disposée dans la partie centrale de la membrane tronconique 4 au niveau de la petite base. La forme conique de la membrane 4 permet de rigidifier celle-ci tout en orientant le liquide vers la périphérie en direction du collecteur annulaire 7. Des crépines de sortie 101 sont disposées dans une zone périphérique de la membrane 4 pour assurer un transfert des gros débits de liquide du compartiment A vers le collecteur 7.

Les petits débits de liquide q issus du dispositif d'expulsion de liquide DEL1 disposé dans le petit compartiment B débouchent à travers des crépines 104′ dans la face inférieure du collecteur annulaire 7. L'évacuation des petits et des gros débits de liquide s'effectue à travers une crépine de sortie 111 disposée dans la face externe du collecteur annulaire 7 et qui débouche dans un tube de sortie 82 qui est légèrement décalé angulairement par rapport à l'axe XX′.

Des crépines 107 permettent le passage direct de l'ergol du petit compartiment B dans le collecteur annulaire 7. Des crépines 107 complétent ainsi les crépines 104 du dispositif d'expulsion de liquide DEL1.

## Revendications

1. Réservoir à tension superficielle, à débits de sortie multiples, destiné à fonctionner en microgravité dans des véhicules spatiaux ou des satellites afin d'alimenter en ergol un moteur principal et au moins un moteur ou récepteur annexe, comprenant à l'intérieur d'une même coque (1) au moins deux compartiments (A,B) de dimensions différentes séparés par au moins une première membrane (4) munie d'au moins une crépine (102) de communication entre le compartiment (A) de plus grandes dimensions et le compartiment (B) de plus petites dimensions, un orifice (9) d'alimentation en gaz de pressurisation étant ménagé dans la coque (1) de manière à déboucher dans le grand compartiment (A), un dispositif d'expulsion de liquide (DEL1) étant placé dans le petit compartiment (B) et des moyens (2) d'évacuation de l'ergol vers les organes à alimenter étant disposés pour l'essentiel selon une direction peu éloignée de celle de l'accélération principale (G_{Q}) conférée par le moteur principal, mais en sens opposé à celle-ci, caractérisé en ce qu'il comprend des moyens munis d'au moins une crépine de sortie (101,111) formant barrière de gaz pour évacuer au moins une partie substantielle de l'ergol contenu dans le grand compartiment (A) directement vers les moyens (2) d'évacuation de l'ergol sans transiter à travers le petit compartiment (B), de telle sorte que le réservoir autorise le prélèvement direct d'ergol à la fois à partir du grand compartiment (A) et à partir du petit compartiment (B) en définissant un débit maximum de sortie d'ergol pouvant être de l'ordre de cent fois le débit minimum autorisé.

2. Réservoir selon la revendication 1, caractérisé en ce qu'il comporte un premier tube de sortie (82) approximativement diamétralement opposé à l'orifice (9) d'alimentation en gaz de pressurisation pour l'évacuation directe de l'ergol à partir du grand compartiment (A).

3. Réservoir selon la revendication 2, caractérisé en ce qu'il comprend un second tube de sortie (31,32) disposé coaxialement autour du premier tube de sortie (82) pour l'évacuation de l'ergol à partir du petit compartiment (B) par un passage annulaire (3) muni d'une crépine (107) formant barrière de gaz.

4. Réservoir selon la revendication 2, caractérisé en ce que le premier tube de sortie (82) de plus faible section débouche dans le second tube de sortie (31).

5. Réservoir selon la revendication 2, caractérisé en ce que les premier et second tubes de sortie (82,32) sont raccordés à des tuyauteries indépendantes.

6. Réservoir selon la revendication 2, caractérisé en ce qu'il comprend un passage de sortie (3) muni d'une crépine (107) formant barrière de gaz, pour l'évacuation de l'ergol à partir du petit compartiment (B), lequel passage de sortie (3) est délocalisé par rapport au premier tube de sortie (82) et se trouve directement raccordé à une tuyauterie (30) indépendante des tuyauteries raccordées au premier tube de sortie (82).

7. Réservoir selon la revendication 2, caractérisé en ce qu'il comprend un passage de sortie (3) muni de crépines de sortie (104,107) formant barrière de gaz, pour l'évacuation de l'ergol à partir du petit compartiment (B), lequel passage de sortie (3) débouche dans un réceptacle (81) qui est lui-même en communication avec le premier tube de sortie (82).

8. Réservoir selon la revendication 1, caractérisé en ce qu'il comprend un premier tube de sortie (82) pour l'évacuation directe de l'ergol à partir du grand compartiment (A) à travers un collecteur annulaire (7) disposé dans une zone frontière entre le grand compartiment (A) et le petit compartiment (B) dans le quart inférieur du réservoir opposé à l'orifice (9) d'alimentation en gaz de pressurisation.

9. Réservoir selon la revendication 1, caractérisé en ce que ladite première membrane (4) est située essentiellement dans un plan perpendiculaire à un axe de symétrie (X′X) du réservoir passant par l'orifice (9) d'alimentation en gaz de pressurisation.

10. Réservoir selon la revendication 1, caractérisé en ce que ladite première membrane (4) est située essentiellement dans un plan parallèle à un axe de symétrie (X′X) du réservoir passant par l'orifice (9) d'alimentation en gaz de pressurisation.

11. Réservoir selon la revendication 9, caractérisé en ce que la première membrane (4) présente une forme incurvée avec sa convexité tournée vers le petit compartiment (B).

12. Réservoir selon les revendications 8 et 9, caractérisé en ce que la première membrane (4) présente une forme tronconique avec sa petite base tournée vers le grand compartiment (A), la crépine (102) de communication entre le grand compartiment (A) et le petit compartiment (B) étant elle-même disposée dans la partie centrale de la première membrane (4) au niveau de ladite petite base.

13. Réservoir selon la revendication 9 et l'une quelconque des revendications 2 à 6, caractérisé en ce que la crépine de sortie (101) formant barrière de gaz pour l'évacuation de l'ergol contenu dans le grand réservoir (A) est située dans la partie centrale de la première membrane (4) tandis que la crépine (102) de communication entre le grand compartiment (A) et le petit compartiment (B) est disposée dans une zone annulaire de la première membrane (4) située à distance de ladite partie centrale.

14. Réservoir selon la revendication 10 et l'une quelconque des revendications 2, 5, 6, 7, caractérisé en ce que la crépine de sortie (111) formant barrière de gaz pour l'évacuation de l'ergol contenu dans le grand réservoir (A) est située dans un collecteur (81) dont la sortie débouche dans le premier tube de sortie (82) tandis que la crépine (102) de communication entre le grand compartiment (A) et le petit compartiment (B) est disposée dans la première membrane (4).

15. Réservoir selon la revendication 9 et l'une quelconque des revendications 2 à 6, caractérisé en ce qu'il comprend en outre une deuxième membrane (41) parallèle à ladite première membrane (40), les première et deuxième membranes (40,41) définissant entre elles ledit petit compartiment (B) muni d'un dispositif d'expulsion de liquide (DEL1) tandis que la deuxième membrane (41) définit par ailleurs avec le fond de réservoir dans lequel sont disposés les moyens (2) d'évacuation d'ergol, un compartiment supplémentaire (C) de petites dimensions dépourvu de dispositif d'expulsion de liquide et constituant un réservoir d'amorçage spécifique du gros débit, la deuxième membrane (41) étant munie d'au moins une crépine (106) de communication entre le petit compartiment (B) et le petit compartiment supplémentaire (C) et le premier tube de sortie (82) traversant sans communication à la fois le petit compartiment (B) et le petit compartiment supplémentaire (C).

16. Réservoir selon la revendication 15, caractérisé en ce que des tubes de communication (50) d'axe perpendiculaire auxdites première et deuxième membranes (40,41) sont placés entre le grand compartiment (A) et le petit compartiment supplémentaire (C), et des crépines (108) sont placées au moins sur l'une des extrémités desdits tubes (50).

17. Réservoir selon la revendication 15 ou la revendication 16, caractérisé en ce que des tubes de communication (83) orientés perpendiculairement auxdites première et deuxième membranes (40,41) sont placés entre le petit compartiment (B) et les moyens (2) d'évacuation d'ergol, et sont munis de crépines (105), formant barrière de gaz pour permettre l'évacuation directe vers les moyens (2) d'évacuation d'ergol, de l'ergol contenu dans le petit compartiment (B).

## Claims

1. Surface tension tank having multiple delivery flow rates, for operation under microgravity in space vehicles or satellites for feeding a main engine and at least one auxiliary receiver or engine with a liquid propellant, the tank comprising a common shell (1) housing at least two compartments (A, B) of different dimensions which are separated by at least one first diaphragm (4) provided with at least one strainer (102) providing communication between the larger-sized compartment (A) and the smaller-sized compartment (B), a pressurization gas feed orifice (9) being provided through the shell (1) to open out into the large compartment (A), a liquid expulsion device (DEL1) being placed in the small compartment (B), and means (2) for delivering liquid to the members to be fed being essentially disposed in a direction that differs little from the main acceleration direction (G{Q}) imparted by the main engine, but in opposite direction thereto, characterized in that it includes means provided with at least one outlet strainer (101, 111) forming a gas barrier for delivering at least a substantial portion of the propellant contained in the large compartment (A) directly to the propellant delivery means (2) without said propellant transitting via the small compartment (B), such that the tank allows liquid to be taken directly both from the large compartment (A) and from the small compartment (B), thereby defining a maximum propellant outlet flow rate which may be about 100 times the minimum authorized flow rate.

2. Tank according to claim 1, characterized in that it includes a first outlet tube (82) approximately diametrically opposite to the pressurization gas feed orifice (9) and serving to deliver propellant directly from the large compartment (A).

3. Tank according to claim 2, characterized in that it includes a second outlet tube (31, 32) disposed coaxially about the first outlet tube (82) to deliver propellant directly from the small compartment (B) via an annular passage (3) itself provided with a strainer (107) constituting a gas barrier.

4. Tank according to claim 2, characterized in that the smaller-section first outlet tube (82) opens out into the second outlet tube (31).

5. Tank according to claim 2, characterized in that the first and second outlet tubes (82, 32) are connected to independent sets of pipework.

6. Tank according to claim 2, characterized in that it includes a outlet passage (3) provided with a strainer (107) constituting a gas barrier for delivering propellant from the small compartment (B), which outlet passage (3) is offset relative to the first outlet tube (82) and is directly connected to pipework (30) that is independent from the pipework connected to the first outlet tube (82).

7. Tank according to claim 2, characterized in that it includes an outlet passage (3) provided with outlet strainers (104, 107) forming gas barriers and serving to deliver propellant from the small compartment (B), which outlet passage (3) opens out into a receptacle (81) which is itself in communication with the first outlet tube (82).

8. Tank according to claim 1, characterized in that it includes a first outlet tube (82) for direct delivery of propellant from the large compartment (A) via an annular collector (7) disposed in a boundary zone between the large compartment (A) and the small compartment (B) within the lower fourth of the tank opposite from the pressurization gas feed orifice (9).

9. Tank according to claim 1, characterized in that said first diaphragm (4) is essentially situated in a plane perpendicular to the axis of symmetry (XX') of the tank, which axis passes through the pressurization gas feed orifice (9).

10. Tank according to claim 1, characterized in that said first diaphragm (4) is situated essentially in a plane parallel to an axis of symmetry (XX') of the tank, which axis passes through the pressurization gas feed orifice (9).

11. Tank according to claim 9, characterized in that the first diaphragm (4) is curved in with its convex side facing towards the small compartment (B).

12. Tank according to claims 8 and 9, characterized in that the first diaphragm (4) is frustoconical in shape with its small base facing towards the large compartment (A), the strainer (102) providing communication between the large compartment (A) and the small compartment (B) being itself disposed in the central portion of the first diaphragm (4) at the small base.

13. Tank according to claim 9 and to any one of claims 2 to 6, characterized in that the outlet strainer (101) forming a gas barrier for delivering the propellant contained in the large tank (A) is situated in the central portion of the first diaphragm (4), while the strainer (102) providing communication between the large compartment (A) and the small compartment (B) is disposed in an annular zone of the first diaphragm (4) situated at a distance from said central portion.

14. Tank according to claim 10 and to any one of claims 2, 5, 6, 7, characterized in that the outlet strainer (111) forming a gas barrier for delivering the propellant contained in the large tank (A) is situated in a collector (81) whose outlet opens out into the first outlet tube (82), while the strainer (102) providing communication between the large compartment (A) and the small compartment (B) is disposed in the first diaphragm (4).

15. Tank according to claim 9 and to any one of claims 2 to 6, characterized in that it further comprises a second diaphragm (41) parallel to said first diaphragm (40), the first and second diaphragms (40, 41) defining between them said small compartment (B) which is provided with a liquid expulsion device (DEL1), while the second diaphragm (41) together with the end wall of the tank in which the propellant delivery means (2) are disposed also defines an additional compartment (C) of small size having no liquid expulsion device and constituting a priming tank specific to the high flow rate, the second diaphragm (41) being provided with at least one strainer (106) for providing communication between the small compartment (B) and the additional small compartment (C), and the first outlet tube (82) passing through both the small compartment (B) and the additional small compartment (C) without communicating therewith.

16. Tank according to claim 15, characterized in that communication tubes (50) having axes perpendicular to said first and second diaphragms (40, 41) are placed between the large compartment (A) and the additional small compartment (C), and a strainer (108) is placed at at least one of the ends of each of said tubes (50).

17. Tank according to claim 15 or claim 16, characterized in that communication tubes (83) extending perpendicularly to said first and second diaphragms (40, 41) are placed between the small compartment (B) and the liquid delivery means (2), and are provided with strainers (105) forming gas barriers to enable the liquid contained in the small compartment (B) to be delivered directly to the liquid delivery means (2).

## Patentansprüche

1. Oberflächenspannungsbehälter mit mehreren Abgabeflußleistungen zur Verwendung unter Mikrogravitation in Raumfahrzeugen oder Satelliten zur Versorgung eines Hauptmotors und wenigstens eines zusätzlichen Motors oder Empfängers mit Treibstoff, der im Inneren einer Schale (1) wenigstens zwei Fächer (A, B) mit unterschiedlichen Ausmaßen umfaßt, die durch wenigstens eine erste Membran (4) getrennt sind, die mit wenigstens einem Verbindungssieb (102) zwischen dem großen Fach (A) und dem kleinen Fach (B) versehen ist, wobei eine Öffnung (9) zur Versorgung mit Druckbeaufschlagungsgas in der Schale (1) so gebildet ist, daß sie in das große Fach (A) mündet, eine Flüssigkeitsaustreibvorrichtung (DEL1) im kleinen Fach (B) angebracht ist und Mittel (2) zum Abfuhren des Treibstoffs zu den zu versorgenden Einrichtungen im wesentlichen entlang einer Richtung angeordnet sind, die wenig von jener der vom Hauptmotor erzeugten Hauptbeschleunigung (G_{Q}) abweicht, dieser aber entgegengerichtet ist,
**dadurch gekennzeichnet, daß** er Mittel umfaßt, die mit wenigstens einem eine Gassperre bildenden Ausgangssieb (101, 111) versehen sind, um wenigstens einen wesentlichen Teil des im großen Fach (A) enthaltenen Treibstoffs direkt zu den Treibstoffabführungsmitteln (2) ohne Durchqueren des kleinen Fachs (B) abzuführen, so daß der Behälter die direkte Entnahme von Treibstoff gleichzeitig aus dem großen Fach (A) und dem kleinen Fach (B) ermöglicht, und dabei eine maximale Treibstoff-Abgabeflußleistung vorgibt, die in der Größenordnung des Hundertfachen der minimal zulässigen Flußleistung liegen kann.

2. Behälter nach Anspruch 1,
dadurch gekennzeichnet, daß
er ein der Öffnung (9) zur Versorgung mit Druckbeaufschlagungsgas ungefähr diametral gegenüberliegendes erstes Ausgangsrohr (82) zur direkten Abführung von Treibstoff aus dem großen Fach (A) aufweist.

3. Behälter nach Anspruch 2,
dadurch gekennzeichnet, daß
er ein zweites Ausgangsrohr (31, 32) aufweist, das koaxial um das erste Ausgangsrohr (82) angeordnet ist und zur Abführung von Treibstoff aus dem kleinen Fach (B) durch einen ringförmigen Durchgang (3) dient, der mit einem eine Gassperre bildenden Sieb (107) versehen ist.

4. Behälter nach Anspruch 2,
dadurch gekennzeichnet, daß
das erste Ausgangsrohr (82) mit geringerem Querschnitt in das zweite Ausgangsrohr (31) mündet.

5. Behälter nach Anspruch 2,
dadurch gekennzeichnet, daß
das erste und das zweite Ausgangsrohr (82, 32) mit unabhängigen Leitungen verbunden sind.

6. Behälter nach Anspruch 2,
dadurch gekennzeichnet, daß
er einen Ausgangsdurchgang (3) zur Abführung von Treibstoff aus dem kleinen Fach (B) umfaßt, der mit einem eine Gassperre bildenden Sieb (107) versehen ist, gegen das erste Ausgangsrohr (82) versetzt ist und direkt an eine Leitung (30) angeschlossen ist, die von den an das erste Leitungsrohr (82) angeschlossenen Leitungen unabhängig ist.

7. Behälter nach Anspruch 2,
dadurch gekennzeichnet, daß
er einen Ausgangsdurchgang (3) zur Abführung von Treibstoff aus dem kleinen Fach (B) umfaßt, der mit eine Gassperre bildenden Ausgangssieben (104, 107) versehen ist, und in ein Gefäß (81) mündet, das seinerseits mit dem ersten Ausgangsrohr (82) verbunden ist.

8. Behälter nach Anspruch 1,
dadurch gekennzeichnet, daß
er ein erstes Ausgangsrohr (82) zur direkten Abführung von Treibstoff aus dem großen Fach (A) durch einen ringförmigen Sammler (7) umfaßt, der in einem Grenzbereich zwischen dem großen Fach (A) und dem kleinen Fach (B) in dem der Öffnung (9) zur Versorgung mit Druckbeaufschlagungsgas gegenüberliegenden unteren Viertel des Behälters angeordnet ist.

9. Behälter nach Anspruch 1,
dadurch gekennzeichnet, daß
die erste Membran (4) im wesentlichen in einer Ebene senkrecht zu einer Symmetrieachse (X'X) des Behälters angeordnet ist, die durch die Öffnung (9) zur Versorgung mit Druckbeaufschlagungsgas verläuft.

10. Behälter nach Anspruch 1,
dadurch gekennzeichnet, daß
die erste Membran (4) im wesentlichen in einer Ebene parallel zu einer Symmetrieachse (X'X) des Behälters angeordnet ist, die durch die Öffnung (9) zur Versorgung mit Druckbeaufschlagungsgas verläuft.

11. Behälter nach Anspruch 9,
dadurch gekennzeichnet, daß
die erste Membran (4) eine gewölbte Form hat, deren konvexe Seite zum kleinen Fach (B) hin gerichtet ist.

12. Behälter nach den Ansprüchen 8 und 9,
dadurch gekennzeichnet, daß
die erste Membran (4) die Form eines Kegelstumpfs mit zum großen Fach (A) hin gerichteter kleiner Grundfläche hat, wobei das Verbindungssieb (102) zwischen dem großen Fach (A) und dem kleinen Fach (B) im zentralen Bereich der ersten Membran (4) in Höhe dieser kleinen Grundfläche angeordnet ist.

13. Behälter nach Anspruch 9 und einem der Ansprüche 2 bis 6,
dadurch gekennzeichnet, daß
das eine Gassperre bei der Abführung des im großen Fach (A) enthaltenen Treibstoffs bildende Ausgangssieb (101) im zentralen Bereich der ersten Membran (4) angeordnet ist, wohingegen das Verbindungssieb (102) zwischen dem großen Fach (A) und dem kleinen Fach (B) in einem vom zentralen Bereich beabstandeten ringförmigen Abschnitt der ersten Membran (4) angeordnet ist.

14. Behälter nach Anspruch 10 und einem der Ansprüche 2, 5, 6, 7,
dadurch gekennzeichnet, daß
das eine Gassperre bei der Abführung des im großen Fach (A) enthaltenen Treibstoffs bildende Ausgangssieb (111) in einem Sammler (81) angeordnet ist, dessen Ausgang in das erste Ausgangsrohr (82) mündet, und daß das Verbindungssieb (102) zwischen dem großen Fach (A) und dem kleinen Fach (B) in der ersten Membran (4) angeordnet ist.

15. Behälter nach Anspruch 9 und einem der Ansprüche 2 bis 6,
dadurch gekennzeichnet, daß
er ferner eine zur ersten Membran (40) parallele zweite Membran (41) aufweist, daß die erste und die zweite Membran (40, 41) zwischen sich das kleine Fach (B) begrenzen, das mit einer Flüssigkeitsaustreibvorrichtung (DEL1) versehen ist, und daß die Zweite Membran (41) außerdem mit dem Boden des Behälters, in dem die Treibstoffabführungsmittel (2) angeordnet sind, ein kleinformatiges Zusatzfach (C) begrenzt, das keine Flüssigkeitsaustreibvorrichtung aufweist und einen speziellen Behälter zum Auslösen der großen Flußleistung darstellt, wobei die zweite Membran (41) mit wenigstens einem Verbindungssieb (106) zwischen dem kleinen Fach (B) und dem kleinen Zusatzfach (C) versehen ist und das erste Ausgangsrohr (82) ohne Verbindung sowohl das kleine Fach (B) als auch das kleine Zusatzfach (C) durchquert.

16. Behälter nach Anspruch 15,
dadurch gekennzeichnet, daß
Verbindungsrohre (50) mit zu der ersten und der zweiten Membran (40, 41) senkrechter Achse zwischen dem großen Fach (A) und dem kleinen Zusatzfach (C) angeordnet sind und daß Siebe (108) an wenigstens einem der Enden dieser Rohre (50) angebracht sind.

17. Behälter nach Anspruch 15 oder Anspruch 16,
dadurch gekennzeichnet, daß
senkrecht zu der ersten und der zweiten Membran (40, 41) orientierte Verbindungsrohre (83) zwischen dem kleinen Fach (B) und den Treibstoffabführungsmitteln (2) angeordnet und mit eine Gassperre bildenden Sieben (105) versehen sind, um die direkte Abführung des im kleinen Fach (B) enthaltenen Treibstoffs zu den Treibstoffabführungsmitteln (2) zu ermöglichen.
